# EUROPEAN PATENT APPLICATION

(11) **EP 4 687 176 A1**
(43) Date of publication of application: **04.02.2026**
(21) Application number: 25171126.3
(22) Date of filing: 16.04.2025
(51) Int. Cl.: H01M 4/04, H01M 10/04

(54) **APPARATUS AND METHOD FOR MANUFACTURING ELECTRODE PLATE OF SECONDARY BATTERY INCLUDING DRYING UNIT**

(30) Priority: 01.08.2024 KR 20240102790
(71) Applicant: SAMSUNG SDI CO., LTD., Yongin-si, Gyeonggi-do 17084 (KR)
(72) Inventor: KIM, DoHyeong, 17084 Yongin-si (KR)
(74) Representative: Marks & Clerk LLP

(57) **Abstract**

An apparatus for manufacturing an electrode plate of a secondary battery includes: a coating unit configured to coat an electrode material onto a substrate to form an electrode plate; a roll pressing unit configured to compress the electrode plate; and a drying unit configured to dry the electrode plate. The drying unit includes a dryer configured to selectively apply heat from a heat source and/or heat of hot wind to dry the electrode plate.

## Description

### BACKGROUND

### 1. Field

Aspects of embodiments of the present disclosure relate an apparatus and method for manufacturing an electrode plate of a secondary battery that includes a drying unit.

### 2. Description of the Related Art

Secondary batteries are batteries that are designed to be charged and discharged, unlike primary batteries that are not designed be recharged. Generally, a secondary battery includes an electrode assembly including positive and negative electrode plates and a separator. The positive and negative electrode plates may be manufactured through processes such as roll-pressing, drying, slitting, notching, and the like, followed by a process of coating an active material on a substrate. The electrode assembly is manufactured by using a winding method or a stacking method for the positive and negative electrode plates with the separator interposed therebetween.

A process of manufacturing the secondary battery may include a coating process of coating an active material mixture on one or both surfaces of an electrode substrate to form an electrode plate and a roll pressing process of compressing and stretching the electrode plate with a roller to make the electrode plate thin and flat, thereby improving the density and allowing lithium ions to smoothly move so that the output and performance of the battery is improved.

A drying unit (e.g., a dryer) may be used to dry the electrode plate that has undergone the coating process and/or roll pressing process. The conventional drying unit uses a method of transmitting radiant energy from a near-infrared (NIR) lamp to the electrode plate. In this method, a position of the lamp cannot be changed or finely controlled during a drying operation, which causes differences in drying to occur. The uneven drying may cause differences in the degree of drying, and in the case of over-drying, materials may fall off the electrode plate, and in the case of under-drying, a problem of incomplete electrolyte impregnation may occur.

The above information disclosed in this Background section is for enhancement of understanding of the background of the present disclosure, and therefore, it may contain information that does not constitute related (or prior) art.

### SUMMARY

Embodiments of the present disclosure provide an apparatus and method for manufacturing an electrode plate of a secondary battery by using an electrode plate drying unit designed to increase the drying efficiency by drying the electrode plate using radiant heat and hot wind (e.g., hot air) together and to perform appropriate drying according to a form factor, condition, and type of the electrode plate selectively using the radiant heat and the hot wind.

According to one embodiment of the present disclosure, an apparatus for manufacturing an electrode plate of a secondary battery includes a coating unit configured to apply an electrode material to a substrate to form an electrode plate, a roll pressing unit configured to compress the electrode plate, and a drying unit configured to dry the electrode plate. The drying unit includes a dryer configured to selectively apply heat from a heat source and/or heat of hot wind to the electrode plate.

There is also provided an apparatus for manufacturing an electrode plate of a secondary battery, the apparatus comprising:
a coating unit configured to coat an electrode material onto a substrate to form an electrode plate;
a roll pressing unit configured to compress the electrode plate; and
a drying unit configured to dry the electrode plate, the drying unit comprising a dryer configured to selectively apply heat from a heat source and/or heat of hot wind to dry the electrode plate.

In some embodiments, the drying unit has a space for accommodating the electrode plate and a chamber for accommodating the dryer,
wherein the dryer has a hot wind inlet through which the hot wind is introduced, and
wherein the chamber has a hot air outlet through which the hot wind introduced via the hot wind inlet is discharged after drying the electrode plate.

In some embodiments, the dryer is configured to vary its distance from the electrode plate in response to a traveling speed of the electrode plate.

In some embodiments, the dryer is configured to select the heat the heat source and/or the hot wind and apply the same to the electrode plate in response to a traveling speed of the electrode plate.

In some embodiments, the drying unit further comprises a movable roller for extending a pass length of the electrode plate passing through the dryer.

In some embodiments, the drying unit further comprises a controller configured to move the movable roller to change the pass length of the electrode plate.

In some embodiments, the dryer further comprises a shutter for blocking the heat from the heat source and the hot wind of the dryer when traveling stoppage of the electrode plate is detected.

In some embodiments, the drying unit further comprises a controller configured to control opening and closing of the shutter.

In some embodiments, the drying unit further comprises a controller configured to:
select the heat of the heat source and/or the hot wind;
adjust an amount of the heat; and
move the dryer toward or away from the electrode plate.

In some embodiments, the dryer of the drying unit comprises:
a first dryer configured to apply the heat from the heat source and/or the heat of the hot wind to a first surface of the electrode plate; and
a second dryer configured to apply the heat from the heat source and/or the heat of the hot wind to a second surface of the electrode plate.

According to embodiment of the present disclosure, a method of manufacturing an electrode plate of a secondary battery includes coating an electrode material to a substrate to form an electrode plate, roll pressing the electrode plate to compress the electrode plate, and drying the electrode plate by using a dryer configured to selectively apply heat from a heat source and/or heat of hot wind to the electrode plate.

There is also provided a method of manufacturing an electrode plate of a secondary battery, the method comprising:
coating an electrode material onto a substrate to form an electrode plate;
roll pressing the electrode plate to compress the electrode plate; and
drying the electrode plate by using a dryer configured to apply heat from a heat source and/or heat of hot wind to the electrode plate.

In some embodiments, the hot wind is introduced through a hot wind inlet of the dryer, and
wherein the introduced hot wind is discharged from the dryer after drying the electrode plate.

In some embodiments, the method further comprises moving the dryer toward or away from the electrode plate in response to a traveling speed of the electrode plate.

In some embodiments, the method further comprises selecting the heat of the heat source and/or the hot wind and applying the heat to the electrode plate in response to a traveling speed of the electrode plate.

In some embodiments, the method further comprises changing a pass length of the electrode plate.

In some embodiments, the method further comprises blocking the heat from at least one of the heat source and/or the hot wind when traveling stoppage of the electrode plate is detected.

According to another embodiment of the present disclosure, a drying device for an electrode plate of a secondary battery includes a dryer configured to selectively apply heat from a heat source and/or heat of hot wind to an electrode plate.

There is also provided a drying device for an electrode plate of a secondary battery, the drying device comprising a dryer configured to apply heat from a heat source and/or heat of hot wind to an electrode plate coated with an electrode material.

In some embodiments, the dryer is configured to vary a position thereof with respect to the electrode plate in response to a traveling speed of the electrode plate.

In some embodiments, the drying device further comprises a movable roller for extending a pass length of the electrode plate to be dried while passing through the dryer.

In some embodiments, the dryer further comprises a shutter configured to selectively block the heat from the heat source and/or the hot wind of the dryer when traveling stoppage of the electrode plate is detected.

Aspects and features of the present disclosure are not limited to those described above, and other aspects and features not specifically mentioned herein will be clearly understood by those skilled in the art from the description of the present disclosure below.

At least some of the above and other features of the invention are set out in the claims. The claimed method may be carried out using the claimed apparatus or the claimed drying device.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a schematic illustration of an electrode assembly of a secondary battery;
FIG. 2 is a schematic illustration of a process of manufacturing an electrode plate of the electrode assembly illustrated in FIG. 1;
FIG. 3 is a schematic diagram of an electrode plate drying unit according to some embodiments of the present disclosure viewed from the side;
FIG. 4 is a view of the electrode plate drying unit shown in FIG. 3 viewed in a traveling direction of the electrode plate;
FIG. 5 is a cross-sectional view taken along the line X-X' in FIG. 4 showing an internal configuration of a chamber according to some embodiments of the present disclosure;
FIG. 6 illustrates moving a position of a first dryer and/or a second dryer closer to or further away from an electrode plate;
FIG. 7 shows one embodiment of a dryer movement mechanism;
FIG. 8 illustrates an operation panel for controlling the dryer movement mechanism according to an embodiment;
FIG. 9 shows an embodiment in which the electrode plate extends a pass line passing through a drying section;
FIG. 10A shows an embodiment in which a shutter installed at an opening of the first dryer and/or the second dryer is open;
FIG. 10B shows an embodiment in which the shutter installed at the opening of the first dryer and/or the second dryer is closed;
FIG. 11A shows a state in which the shutter is closed by a shutter control mechanism;
FIG. 11B shows a state in which the shutter is opened by the shutter control mechanism;
FIG. 12 is a schematic diagram of a controller configured to control the electrode plate drying unit according to an embodiment;
FIG. 13 is a schematic illustration of a pouch-type secondary battery including an electrode assembly manufactured by using the electrode plate dried according to embodiments of the present disclosure;
FIG. 14 is a cross-sectional view of a cylindrical secondary battery including an electrode assembly manufactured by using the electrode plate dried according to embodiments of the present disclosure; and
FIG. 15 is a cross-sectional view of a prismatic secondary battery including an electrode assembly manufactured by using the electrode plate dried according to embodiments of the present disclosure.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects and features of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

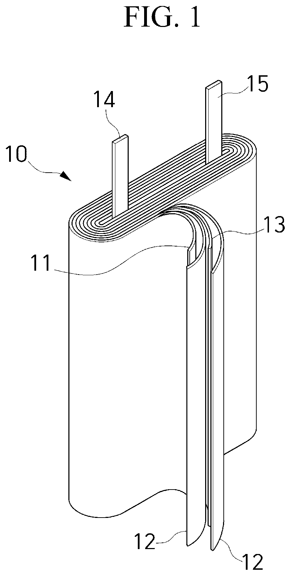

FIG. 1 is a schematic illustration of an electrode assembly of a secondary battery.

An electrode assembly 10 may be formed by winding or stacking a stack of a first electrode plate 11, a separator 12, and a second electrode plate 13, which are each formed as thin plates or films. When the electrode assembly 10 is a wound stack, a winding axis may be parallel to the longitudinal direction of a battery case. In other embodiments, the electrode assembly 10 may be a stack type rather than a winding type, but the shape of the electrode assembly 10 is not limited in the present disclosure. In addition, the electrode assembly 10 may be a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying a first electrode active material, such as graphite or carbon, to a first electrode current collector formed of a metal foil, such as copper, a copper alloy, nickel, or a nickel alloy. The first electrode plate 11 may include a first electrode tab 14 (e.g., a first uncoated portion) that is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying a second electrode active material, such as a transition metal oxide, on a second electrode current collector formed of a metal foil, such as aluminum or an aluminum alloy. The second electrode plate 13 may include a second electrode tab 15 (e.g., a second uncoated portion) that is a region to which the second electrode active material is not applied. The second electrode tab 15 may be connected to an external second terminal. In some embodiments, the second electrode tab 15 may be formed by being cut in advance to protrude to (or protrude from) the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

In some embodiments, the first electrode tab 14 may be located on the left side of the electrode assembly 10, and the second electrode tab 15 may be located on the right side of the electrode assembly 10. In other embodiments, the first electrode tab 14 and the second electrode tab 15 may be located on one side (e.g., on the same side) of the electrode assembly 10 in the same direction.

Here, for convenience of description, the left and right sides are defined according to the electrode assembly 10 as oriented in FIG. 1, and the positions thereof may change when the secondary battery is rotated left and right or up and down.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

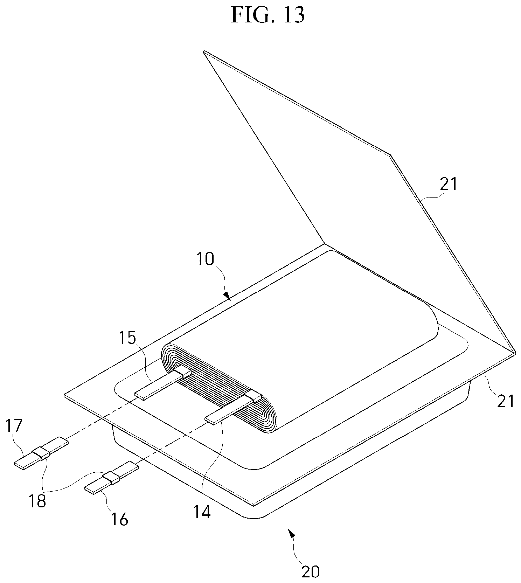

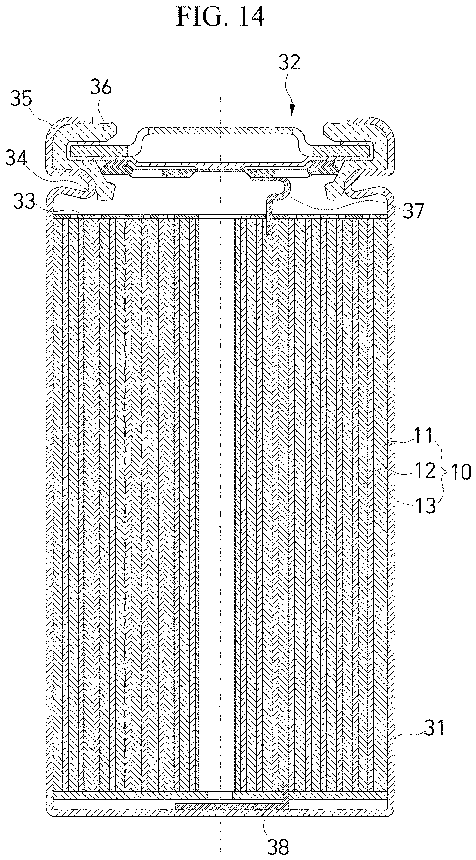

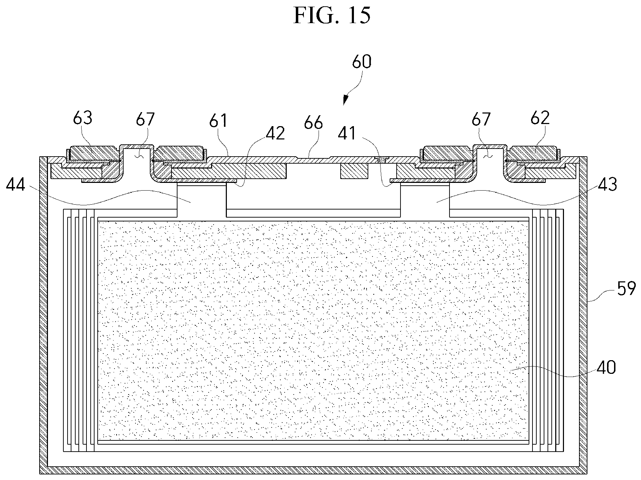

In some embodiments, the electrode assembly 10 may be accommodated in the case along with an electrolyte. In the case of a pouch-type secondary battery, an electrode assembly 10 may be accommodated in a pouch made of flexible material in the form illustrated in, for example, FIG. 13. In the case of a cylindrical or prismatic secondary battery, an electrode assembly 10 may be accommodated in a cylindrical or prismatic metal casing in the form illustrated in, for example, FIGS. 14 and 15.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

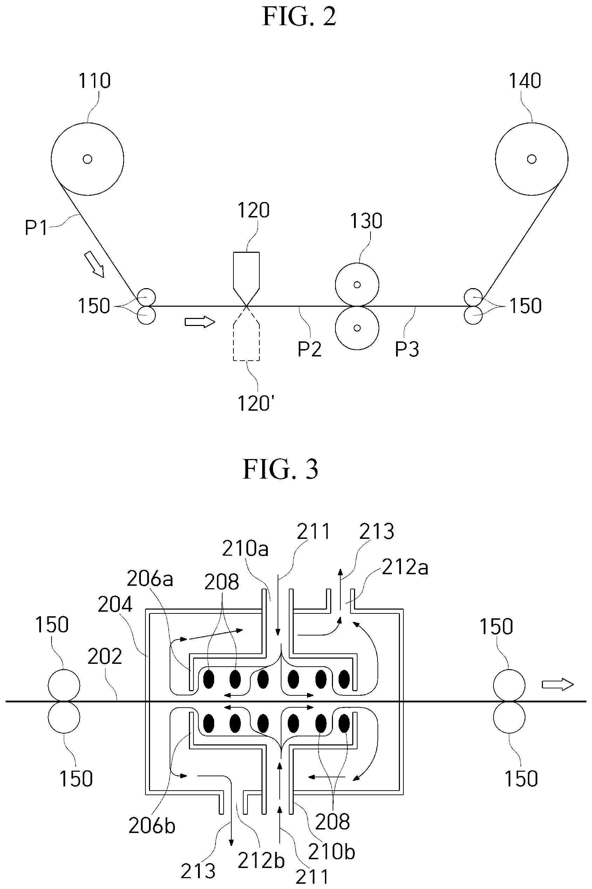

FIG. 2 is a schematic diagram of a process of manufacturing an electrode plate (e.g., the first electrode plate 11 or the second electrode plate 13) of the electrode assembly.

A supply roll 110 may be a roll on which a substrate P1 for the electrode plate is wound. For example, when an apparatus for manufacturing an electrode plate according to embodiments of the present disclosure is used to manufacture a positive electrode plate, the substrate P1 may be a metal foil including (or containing) aluminum (Al). When the apparatus for manufacturing an electrode plate according to embodiments of the present disclosure is used to manufacture a negative electrode plate, the substrate P1 may be a metal foil including (or containing) copper (Cu) or nickel (Ni).

A transfer roller 150 may be an idle roller that guides the substrate P1 as it is unwound from the supply roll 110 or a driving roller that applies a pulling force to unwind the substrate P1 from the supply roll 110. In FIG. 2, a total of four transfer rollers 150 are shown, but this embodiment is merely an example, and the number and positions thereof may be changed as needed.

A coating unit 120 forms a coating layer by coating the substrate P1 with a mixture (e.g., an electrode material) in a slurry or powder state that has been prepared in advance.

Here, the coated mixture may include an active material. For example, when the apparatus for manufacturing an electrode plate according to embodiments of the present disclosure is used to manufacture a positive electrode plate, the active material may include a lithium transition metal oxide, a binder, and a volatile solvent . Even when manufacturing a negative electrode plate, a mixture of the active material, the binder, and the solvent may be prepared. In addition, both surfaces of the substrate P1, that is, an upper surface and a lower surface of the substrate P1, may be concurrently (or simultaneously) coated by adding a second coating unit 120' having the same configuration as the coating unit 120 to the lower surface of the substrate P1.

A press unit 130 (e.g., a rolling unit) includes a roller to compress an electrode plate P2 coated with the slurry (mixture) by the coating unit 120 to produce a high-capacity and high-density secondary battery.

A winding roll 140 is a roll that winds and accommodates an electrode plate P3 coated by the coating unit 120 and rolled by the press unit 130.

When manufacturing an electrode plate, a process of drying a liquid component in a slurry may be included. In the drying process, a drying unit is used to dry the electrode plate by spraying hot wind (e.g., hot air) on the electrode plate through a drying duct. The drying process may be performed after an electrode plate coating process and/or after a roll pressing process.

FIG. 3 is a schematic diagram of an electrode plate drying unit (or drying furnace) according to some embodiments of the present disclosure viewed from the side. The electrode plate drying unit may dry the active material applied to (e.g., coated on) an upper and/or lower portion of an electrode plate 202 transferred by the transfer roller 150 in the coating process and/or the roll pressing process described above with reference to FIG. 2. FIG. 3 and the drawings below illustrate embodiments of the electrode plate 202 having an active material applied to both surfaces, it will be appreciated that embodiments may be easily modified to accommodate an electrode plate 202 having an active material applied to only one surface.

The drying unit shown in FIG. 3 includes a chamber 204 providing a space in which a first surface and a second surface of the electrode plate 202 are accommodated, a first dryer 206a having an opening facing toward a first surface of the electrode plate 202 for drying the first surface of the electrode plate 202 and accommodated in the chamber 204, a second dryer 206b having an opening facing toward a second surface of the electrode plate 202 for drying the second surface of the electrode plate 202 and accommodated in the chamber 204, a heat source 208 built into the first dryer 206a and the second dryer 206b configured to radiate heat to the electrode plate 202 through openings, a first hot wind inlet 210a through which hot wind 211 is introduced into the first dryer 206a, a second hot wind inlet 210b through which the hot wind 211 is introduced into the second dryer 206b, a first hot air outlet 212a through which used hot wind 213 is discharged from the chamber 204 after the hot wind 211 introduced through the first hot wind inlet 210a is discharged through the opening in the first dryer 206a and used to dry the electrode plate 202, and a second hot air outlet 212b through which the used hot wind 213 is discharged from the chamber 204 after the hot wind 211 introduced into the second hot wind inlet 210b is discharged through the opening in the second dryer 206b and used to dry the electrode plate 202.

In this way, the first dryer 206a may radiate heat from the heat source 208 installed therein to the electrode plate 202 and emit the introduced hot wind 211 toward the electrode plate 202. The emitted hot wind 211 may be discharged through the first hot air outlet 212a after drying the electrode plate 202 and then passing through the chamber 204. Similarly, the second dryer 206b may radiate heat from the heat source 208 installed therein to the electrode plate 202 and emit the introduced hot wind 211 toward the electrode plate 202. The emitted hot wind 211 may be discharged through the second hot air outlet 212b after drying the electrode plate 202 and then passing through the chamber 204.

The heat source 208 may be an infrared (IR) lamp or near-infrared (NIR) lamp but is not limited thereto. For example, a halogen lamp, a positive temperature coefficient (PTC) lamp, an electrical resistance heating element, or the like may also be used as the heat source 208.

In some embodiments, the first dryer 206a and the second dryer 206b may dry the electrode plate 202 using both radiant heat from the heat source 208 and heat of the hot wind 211. In some other embodiments, the first dryer 206a and the second dryer 206b may dry the electrode plate 202 by selectively applying one of the radiant heat from the heat source 208 and the heat of the hot wind 211.

In a conventional drying unit, a method of transferring radiant energy from a near-infrared (NIR) lamp to the electrode plate 202 is used, and in such a method, it is not possible to change or finely control the position of the NIR lamp during the drying operation, resulting in differences in the drying amount in the acceleration/deceleration and constant-speed sections of the electrode plate 202. In addition, the drying amount may be affected due to residual heat even when the NIR lamp is turned off in a traveling stop section of the electrode plate 202. Uneven drying may cause differences in the degree of drying, and in the case of over-drying, materials may fall off the electrode plate, and in the case of under-drying, a problem of incomplete electrolyte impregnation may occur.

According to embodiments of the present disclosure, drying efficiency may be improved by drying the electrode plate by using radiant heat and hot wind together and appropriate drying according to the form factor, condition, type, or the like of the electrode plate may be performed by selectively using the radiant heat and the hot wind. In addition, the drying amount of the electrode plate may be appropriately controlled by moving the dryers 206a and 206b to change their positions, selecting heat from one of the heat source or hot wind in response to acceleration/deceleration, constant-speed traveling, or the like, of the electrode plate derived by detecting a traveling speed of the detected electrode plate, and so on. In addition, the unevenness of the drying amount may be improved by extending a residence time by increasing a path length (pass line) of the electrode plate 202 within the drying chamber 204. In addition, when the traveling stoppage of the electrode plate 202 is detected, the heat radiation and/or hot wind emission of the dryers 206a and 206b may be blocked to prevent the radiant heat or hot wind from being applied to the electrode plate. The control functions may be performed by a controller and a software program.

The drying unit, according to embodiments of the present disclosure, is applicable in some embodiments to the roll pressing process following the coating process, in other embodiments to the sections before or after the rolling process, and in still other embodiments to all sections after the coating process.

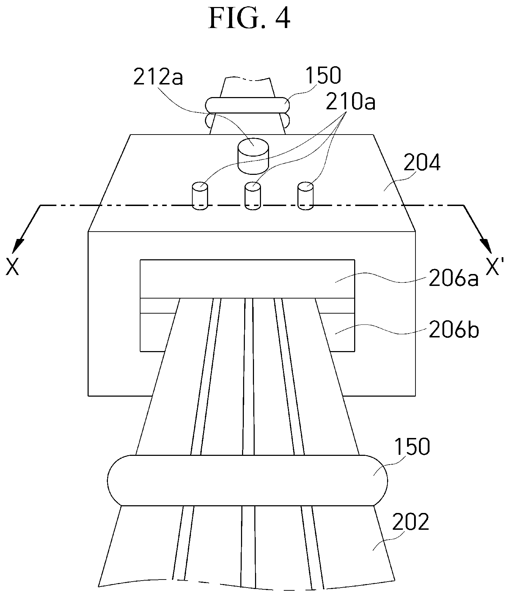

FIG. 4 is a view of the electrode plate drying unit according to some embodiments of the present disclosure viewed in a traveling direction of the electrode plate.

The electrode plate 202 is traveling through the chamber 204. The electrode plate 202 may be dried by the heat radiated from the first dryer 206a and/or the second dryer 206b and/or the hot wind 211 while passing between the first dryer 206a and the second dryer 206b.

The first hot wind inlet 210a through which the hot wind 211 is introduced into the first dryer 206a is visible. The second hot wind inlet 210b through which the hot wind 211 is introduced into the second dryer 206b is not visible in FIG. 4 because the second hot wind inlet is positioned below the chamber 204. In the illustrated embodiment, three first hot wind inlets 210a are installed.

In addition, the first hot air outlet 212a through which the used hot wind 213 is discharged from the chamber 204 is visible in FIG. 4. Similarly, the second hot air outlet 212b is positioned below the chamber 204 and is, therefore, not visible.

The hot wind 211 introduced through the second hot wind inlet 210b is discharged through the second dryer 206b and used to dry the electrode plate 202, and then the used hot wind 213 may be discharged from the chamber 204 through the second hot air outlet 212b.

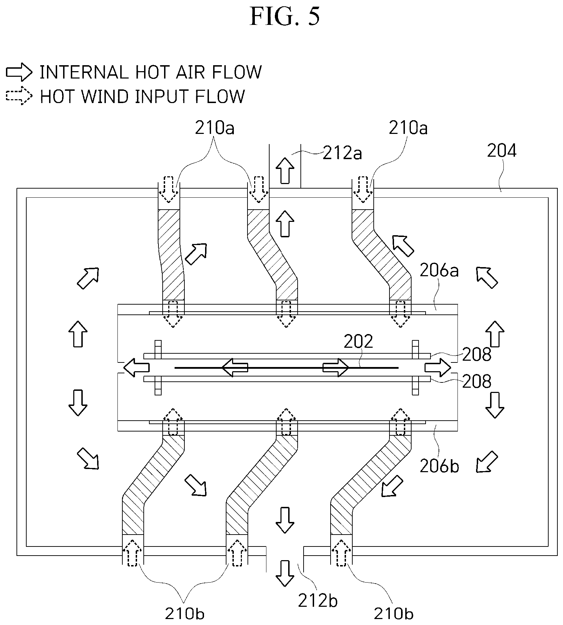

FIG. 5 is a cross-sectional view taken along the line X-X' in FIG. 4 showing an internal configuration of the chamber 204 according to some embodiments of the present disclosure.

Referring to FIG. 5, three first hot wind inlets 210a that allow the hot wind to enter the first dryer 206a and three second hot wind inlets 210b that allow the hot wind to enter the second dryer 206b are shown. In some embodiments, an inlet valve may be installed in each of the first hot wind inlet 210a and the second hot wind inlet 210b. Each inlet valve may be controlled by an electrical signal from a controller to prevent the hot wind from being introduced into the first dryer 206a and the second dryer 206b or to change (or vary) the amount of the hot wind. In another embodiment, the hot wind may be selectively introduced into the first dryer 206a or the second dryer 206b, and the introduction amount thereof may be differently adjusted. The selective introduction and different introduction amount adjustment for each dryer may also be controlled by the controller.

The hot wind introduced through the first hot wind inlets 210a and second hot wind inlets 210b is discharged to the first dryer 206a and the second dryer 206b, respectively, and used to dry the electrode plate 202 passing between the openings. The used hot wind may pass through the chamber 204 to be discharged through the first hot air outlet 212a and the second hot air outlet 212b. In FIG. 5, a flow of the introduced hot wind is indicated by the dotted arrows, and a flow of used internal hot air is indicated by the solid arrows. A blower fan or pressure differential generator may be used to facilitate hot air discharge from the chamber 204.

In the embodiment illustrated in FIG. 5, a bar-shaped lamp is used as the heat source 208 and radiates radiant heat by being built into each of the first dryer 206a and the second dryer 206b. The turning on and turning off of the heat source 208 may be controlled by a controller, and the control may be differently performed (e.g., individually controlled) for the first dryer 206a and the second dryer 206b. For example, the heat source 208 of the first dryer 206a may be turned on and the heat source 208 of the second dryer 206b may be turned off, both may be turned off or turned on, etc. In addition to turning on/off of the heat source 208, the amount of radiant heat may be adjusted. The turning on/off of the heat source 208 and the adjustment of the amount of radiant heat may be controlled by the controller.

In some embodiments, the first dryer 206a and/or the second dryer 206b may be moved up and down. That is, a distance between the electrode plate 202 and the first dryer 206a and/or the second dryer 206b may be varied so that the drying amount may be adjusted depending on a situation or condition of the electrode plate 202. Control of the up and down movement of the first dryer 206a and/or the second dryer 206b may be performed by a controller.

In some embodiments, the first dryer 206a and/or the second dryer 206b may include openable shutters at the openings. By controlling the shutter, the amount of radiant heat may be adjusted or blocked, the emitted hot wind may be adjusted or blocked, and so on.

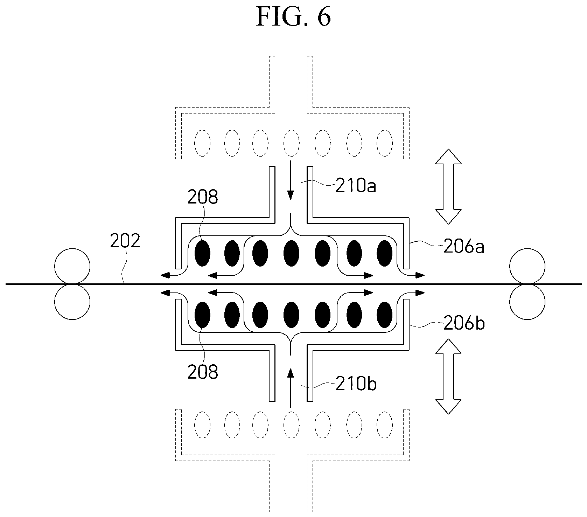

FIG. 6 illustrates a method of adjusting the amount of heat of the heat source 208 and the hot wind 211 depending on the state (e.g., traveling speed) of the electrode plate 202 in connection with an embodiment in which the position of the first dryer 206a and/or the second dryer 206b is moved closer to or further away from the electrode plate 202.

In the illustrated embodiment, the position (e.g., movement) of the first dryer 206a and/or the second dryer 206b may be controlled by a controller. The controller may recognize (e.g., may determine) a state of the electrode plate 202, such as the traveling speed, by using a sensor or other electrical signal and may control a dryer movement mechanism so that an appropriate amount of heat may be applied to the electrode plate depending on the state, or in response to a command received from a user.

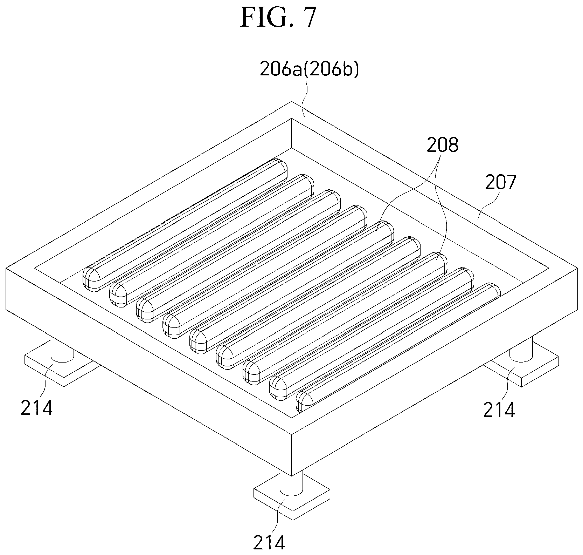

FIG. 7 illustrates a dryer movement mechanism according to an embodiment of the present disclosure. A lifting actuator 214 may be installed in a housing 207 of the first dryer 206a and/or the second dryer 206b. For example, there may be one in each corner of the housing 207. The lifting actuator 214 may perform a rising and falling (e.g., lifting or lowering) operation in response to an electrical signal from a controller to change the position of the first dryer 206a and/or the second dryer 206b. The lifting actuator 214 may be implemented by using a fluid cylinder, such as a pneumatic or hydraulic cylinder, a servo cylinder using a servo motor, a gear box, and the like.

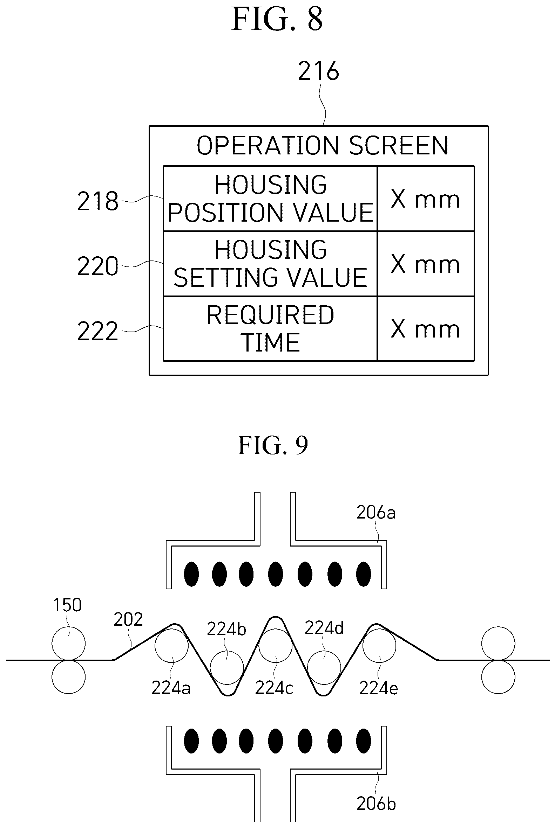

FIG. 8 illustrates an operation panel for controlling the dryer movement mechanism according to an embodiment. A user operation screen 216 may be a part of a user interface included in the controller. The user operation screen 216 for moving the dryer may include a housing position value display 218 that displays a current position value of the housing 207 so that the user may monitor the position value in real time. The current position value of the housing may be derived by recognizing a current state of the lifting actuator 214, for example, a servo cylinder, by the controller. The operation screen 216 may also include a housing setting value entry section 220 that allows the user to enter and display position setting values for specifying a moving position of the housing 207. The operation screen 216 may also include a required time entry section 222 for entering a time required for the housing 207 to reach the housing setting position that has been entered above. Because the time required to move the housing 207 to the set position may vary depending on the traveling speed of the electrode plate 202, the required time entry section 222 may be needed in some cases. Speed control of the lifting actuator 214 according to the input required time may be executed by a program built into the controller (e.g., a PLC program).

FIG. 9 shows an embodiment of a method for extending a residence time of the electrode plate 202 in a drying section in which a plurality of movable rollers 224a to 224e are installed above and below the electrode plate 202 passing between the first dryer 206a and the second dryer 206b, and the movable rollers 224a to 224e are moved up and down in an offset manner, thereby lengthening the pass line so that a time for the electrode plate 202 to pass through the section (e.g., the drying section) is increased. Positions of the movable rollers 224a to 224e shown in FIG. 9 represent one of many possible positions, and in actual implementation, each of the movable rollers 224a to 224e may be configured so that its position independently moves up and down. In this way, the pass line of the electrode plate 202 in the drying section may be arbitrarily extended or narrowed.

In the embodiment, the up and down movement of each of the movable rollers 224a to 224e may be controlled by a controller. The controller may recognize the state of the electrode plate 202, such as the traveling speed, by using a sensor or other electrical signal, or may receive a command from the user and generate an electrical signal to move each of the movable rollers 224a to 224e up and down.

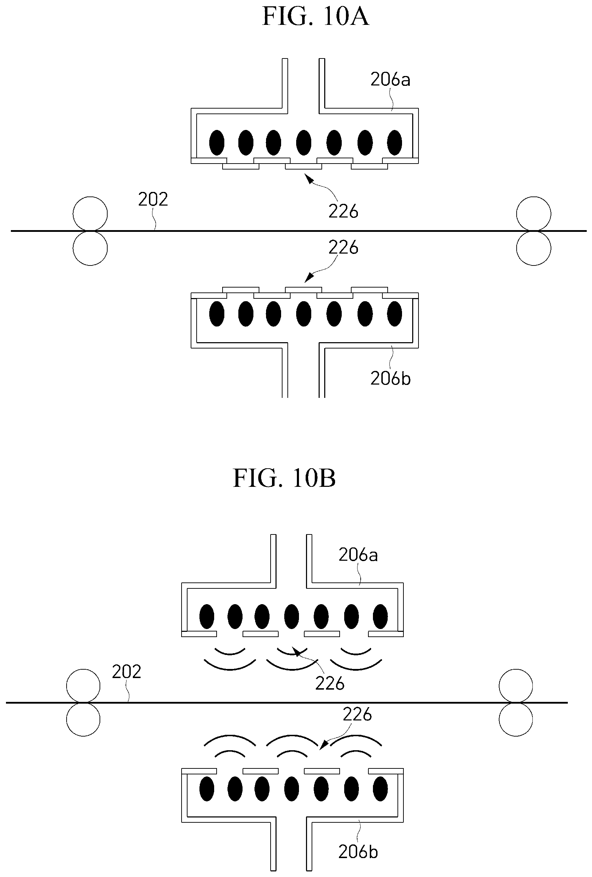

FIGS. 10A and 10B illustrate embodiments in which the shutter 226 is installed at the openings of the first dryer 206a and/or the second dryer 206b.

The illustrated embodiments show an example of the method of adjusting the amount of heat of the heat source 208 and the hot wind 211 depending on the state (e.g., traveling speed) of the electrode plate 202 in which the position of the first dryer 206a and/or the second dryer 206b is moved closer to or further away from the electrode plate 202.

FIG. 10A shows a state in which the shutter 226 installed at the opening in the first dryer 206a and/or the second dryer 206b is closed so that heat radiation from the heat source 208 is blocked. FIG. 10B shows a state in which the shutter 226 installed at the opening in the first dryer 206a and/or the second dryer 206b is opened so that the heat of the heat source 208 is radiated to the electrode plate 202. Although the shutter 226 is shown as being fully open in FIG. 10B, in some embodiments, the shutter 226 may be configured to be partially open to adjust the amount of radiant heat to the electrode plate 202.

In various embodiments, the operation of the shutter 226 may be manually controlled by user operation or automatically by a controller. The controller may recognize the state of the electrode plate 202, such as the traveling speed, through a sensor or other electrical signal, or may receive a command from the user and control a shutter opening/closing mechanism so that an appropriate amount of heat may be applied to the electrode plate.

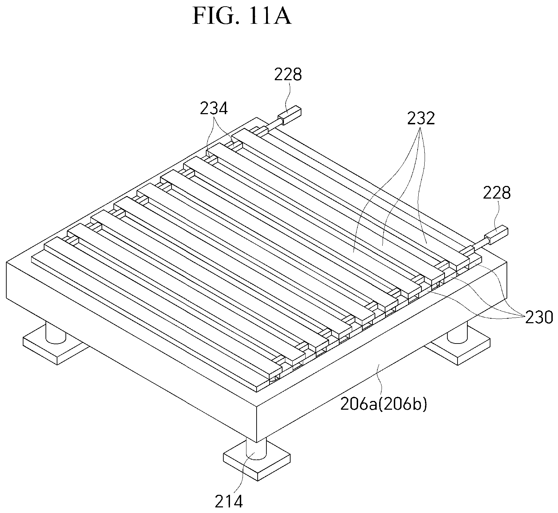

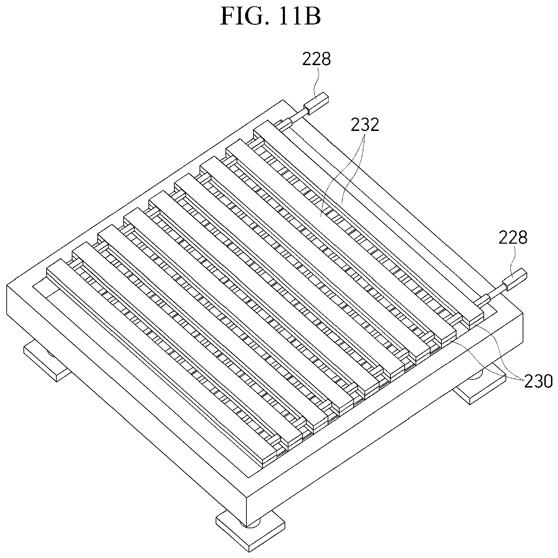

FIGS. 11A and 11B illustrate an embodiment of a shutter control mechanism. According to the illustrated embodiment, a plurality of first-floor strip plates 230 are attached at intervals across the opening in the first dryer 206a and/or the second dryer 206b, as shown in FIG. 11A. Second-floor strip plates 232 are arranged at intervals on top of the first-floor strip plate 230. The second-floor strip plates 232 are connected by a connecting rod 234, and the connecting rod 234 may be linearly moved by a reciprocating actuator 228. Therefore, all of the second-floor strip plates 232 may linearly move at the same time by the connecting rod 234.

With this configuration, the interval formed by the first-floor strip plates 230 and the interval formed by the second-floor strip plates 232 may overlap or be misaligned, as shown in FIG. 11B. Accordingly, the opening in the dryer may be closed or open.

The actuator 228 may be implemented as a fluid (e.g., pneumatic, hydraulic, or the like) cylinder, a servo motor mechanism, a gearbox, and the like. The operation of the actuator 228 may be automatically performed by a controller or by user command. By building a program (e.g., a PLC program) in the controller, the actuator 228 may be automatically controlled as follows: when the electrode plate 202 travels, the actuator 228 is operated to open the shutter 226, and when the electrode plate 202 stops traveling, the actuator 228 is operated to close the shutter 226.

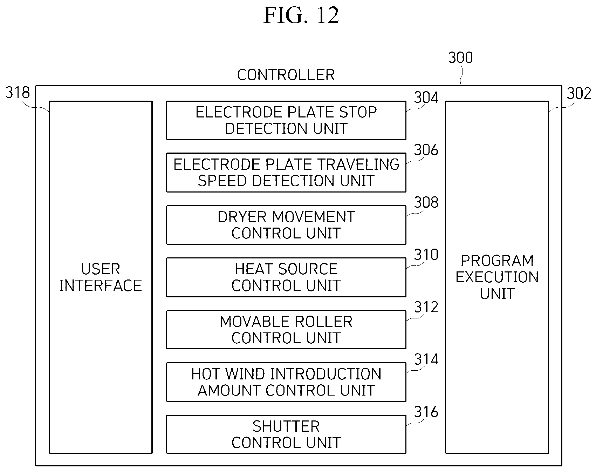

FIG. 12 is a schematic diagram of one embodiment of a controller 300 configured to control the electrode plate drying unit according to the embodiments described above.

The controller may include a program execution unit 302 that executes a program (e.g., a PLC program) for performing control of the drying unit according to the present disclosure, for example, control of the operation and position movement of the dryers 206a and 206b, movement of each of the movable rollers 224a to 224e, adjustment of the amount of heat of the heat source 208, adjustment of the introduction amount of the hot wind 211, opening and closing of the shutter 226, and the like, an electrode plate stop detection unit 304 that detects traveling stoppage of the electrode plate 202 for blocking heat radiation and/or hot wind emission from the dryers 206a and 206b when the electrode plate 202 stops traveling, an electrode plate traveling speed detection unit 306 that detects the traveling speed of the electrode plate 202 for appropriately controlling the drying amount of the electrode plate by calculating acceleration/deceleration, constant-speed traveling, or the like, of the electrode plate according to the traveling speed of the electrode plate 202 to change positions of the dryers 206a and 206b or select the heat source or the hot wind, a dryer movement control unit 308 that controls the position movement of the dryers 206a and 206b to change the position of the dryers 206a and 206b by detecting the traveling speed of the electrode plate 202, a heat source control unit 310 that controls or adjusts the operation (on/off) or radiant heat of the heat sources 208 of the dryers 206a and 206b, a movable roller movement control unit 312 that moves each of the movable rollers 224a to 224e shown in FIG. 9 for extending the residence time of the electrode plate 202 in the drying section, a hot wind introduction amount control unit 314 that controls inlet valves 209a and 209b or other devices (blowers or the like) as shown in, for example, FIG. 5 for adjusting the introduction amount of the hot wind 211 introduced into the dryers 206a and 206b, a shutter control unit 316 that opens or closes the shutters 226 installed in the dryers 206a and 206b when a state where the electrode plate 202 is moving or stopped is detected, and a user interface 318 that allows the user to input user commands or required data and displays information to be provided to the user so that the user may manually operate various operations of the dryers 206a and 206b.

The specific functions of each of the components are included in the description of the drying unit above. In addition, the components of the controller 300 are intended to be separately described from a functional perspective and may be physically integrated or further separated during actual implementation.

In the embodiments described above, the drying unit is described as including the first dryer 206a and the second dryer 206b, each positioned on both sides of the electrode plate 202. However, in other embodiments, the dryer may be positioned on only one side of the electrode plate 202. The description of the embodiments described above may be applied essentially identically to the dryer installed on one side.

FIG. 13 is a schematic illustration of a pouch-type secondary battery including an electrode assembly manufactured by using the electrode plate dried using a drying device according to the embodiments of the present disclosure described above.

The pouch-type secondary battery includes an electrode assembly 10 and a pouch 20 that accommodates the electrode assembly 10.

The electrode assembly 10 is the same as that illustrated in FIG. 1. The first electrode tab 14 and the second electrode tab 15 of the electrode assembly 10 may be electrically connected to respective external first and second terminal leads 16 and 17 by welding. Each of the first terminal lead 16 and the second terminal lead 17 may be attached with (e.g., covered by) a tab film 18 for insulation from the pouch 20.

The pouch 20 may be sealed by having sealing parts 21 at the edges thereof come into contact with each other with accommodating the electrode assembly 10 therein, in which case the sealing may be achieved with the tab film 18 interposed between the sealing parts 21. The sealing parts 21 of the pouch 20 may each be made of a thermal fusion material that generally exhibits weak adhesion to metal. Thus, the pouch 20 may be fused by interposing the thin tab film 18 between the sealing parts 21.

FIG. 14 is a cross-sectional view of a cylindrical secondary battery including an electrode assembly manufactured by using the electrode plate dried using a drying device according to the embodiments of the present disclosure described above.

The cylindrical secondary battery may include an electrode assembly 10, a case 31 accommodating the electrode assembly 10 and an electrolyte therein, a cap assembly 32 coupled to an opening in the case 31 to seal the case 31, and an insulating plate 33 positioned between the electrode assembly 10 and the cap assembly 32 inside the case 31.

The case 31 accommodates the electrode assembly 10 and the electrolyte, and, together with the cap assembly 32, forms the external appearance of the secondary battery. The case 31 may have a substantially cylindrical body portion and a bottom portion connected to one side (e.g., to one end) of the body portion. A beading part 34 (e.g., a bead) deformed inwardly may be formed in the body portion, and a crimping part 35 (e.g., a crimp) bent inwardly may be formed at an open end of the body portion.

The beading part 34 can reduce or prevent movement of the electrode assembly 10 inside the case 31 and can facilitate seating of the gasket and the cap assembly 32. The crimping part 35 may firmly fix the cap assembly 32 by pressing the edge of the case 31 against the gasket 36. The case 31 may be formed of iron plated with nickel, for example.

The cap assembly 32 may be fixed to the inside of the crimping part 35 by a gasket 36 to seal the case 31. A first lead tab 37 drawn out from the electrode assembly 10 may be connected to the cap assembly 32, and a second lead tab 38 drawn out from the electrode assembly 10 may be electrically connected to the bottom of the case 31.

FIG. 15 is a cross-sectional view of a prismatic secondary battery including an electrode assembly manufactured by using the electrode plate dried using a drying device according to the embodiments of the present disclosure described above.

As shown in FIG. 15, a prismatic secondary battery may include an electrode assembly 40, a first current collector 41, a first terminal 62, a second current collector 42, a second terminal 63, a case 59, and a cap assembly 60.

In the electrode assembly 40, the first current collector 41 and the second current collector 42 may be welded and connected to a first electrode tab 43 extending from the first electrode plate and a second electrode tab 44 extending from the second electrode plate, respectively. As mentioned above, in some embodiments in which the first electrode tab 43 and the second electrode tab 44 are located at the top of the electrode assembly 40, the first and second current collectors are located at the top of the electrode assembly 40.

The first current collector 41 and the second current collector 42 are electrically connected to the first terminal 62 and the second terminal 63 through connection members 67, respectively. In some embodiments, the connection members 67 may each have an outer peripheral surface that is threaded and may be fastened to the first terminal 62 and the second terminal 63 by screwing. However, the present disclosure is not limited thereto. For example, the connection members 67 may also be coupled to the first terminal 62 and the second terminal 63 by riveting or welding.

According to the present disclosure, the drying efficiency of an electrode plate can be increased by drying the electrode plate by concurrently using radiant energy from a heat source and hot wind or an appropriate drying method can be applied depending on a form factor, condition, and type of the electrode plate by selecting one of the radiant energy and the hot wind. In addition, a position of a dryer can be variably controlled and/or the amount of heat from the heat source/hot wind can be controlled depending on a situation, such as acceleration/deceleration, a constant speed, or the like, of the electrode plate by detecting a traveling speed of the electrode plate, and the unevenness of a drying amount can be improved by extending a residence time of the electrode plate through movement of a roller position within a drying chamber. In addition, when traveling of the electrode plate is stopped, heat radiation and/or hot wind emission from the dryer can be blocked to prevent over-drying of the electrode plate.

Although the present disclosure has been described above with respect to embodiments thereof, the present disclosure is not limited thereto. Various modifications and variations can be made thereto by those skilled in the art within the scope of the appended claims.

Embodiments are set out in the following clauses:
Clause 1. An apparatus for manufacturing an electrode plate of a secondary battery, comprising:
   a coating unit configured to apply an electrode material to a substrate;
   a roll pressing unit configured to compress an electrode plate coated with the electrode material; and
   a drying unit configured to dry the electrode plate coated with the electrode material or the roll-pressed electrode plate,
   wherein the drying unit includes a dryer for applying at least one of heat from a heat source and heat of hot wind to the electrode plate.
Clause 2. The apparatus as claimed in clause 1, wherein the drying unit provides a space in which the electrode plate is accommodated and further includes a chamber configured to accommodate the dryer,
   the dryer further includes a hot wind inlet through which the hot wind is introduced, and
   the chamber includes a hot air outlet through which the hot wind introduced into the hot wind inlet of the dryer is discharged and used to dry the electrode plate, and then the used hot wind is discharged.
Clause 3. The apparatus as claimed in clause 1 or clause 2, wherein the dryer is configured to move a position thereof from the electrode plate in response to a traveling speed of the electrode plate.
Clause 4. The apparatus as claimed in any one of the preceding clauses, wherein the dryer is configured to select the heat of at least one of the heat source and the hot wind and apply the heat to the electrode plate in response to a traveling speed of the electrode plate.
Clause 5. The apparatus as claimed in any one of the preceding clauses, wherein the drying unit further includes a movable roller for extending a pass line of the electrode plate to be dried while passing through the dryer.
Clause 6. The apparatus as claimed in clause 5, wherein the drying unit further includes a controller configured to move the movable roller to change the pass line of the electrode plate.
Clause 7. The apparatus as claimed in any one of the preceding clauses, wherein the dryer further includes a shutter for blocking the heat from at least one of the heat source and the hot wind of the dryer when traveling stoppage of the electrode plate is detected.
Clause 8. The apparatus as claimed in clause 7, wherein the drying unit further includes a controller configured to control opening and closing of the shutter.
Clause 9. The apparatus as claimed in any one of the preceding clauses, wherein the drying unit further includes a controller configured to:
   select heat of at least one of the heat source and the hot wind;
   adjust an amount of heat of at least one of the heat source and the hot wind; and
   move the dryer from the electrode plate.
Clause 10. The apparatus as claimed in any one of the preceding clauses, wherein the dryer of the drying unit includes:
   a first dryer configured to apply at least one of the heat from the heat source and the heat of the hot wind to a first surface of the electrode plate; and
   a second dryer configured to apply at least one of the heat from the heat source and the heat of the hot wind to a second surface of the electrode plate.
Clause 11. A method of manufacturing an electrode plate of a secondary battery, comprising:
   performing coating by applying an electrode material to a substrate;
   performing roll pressing by compressing an electrode plate coated with the electrode material; and
   drying the electrode plate coated with the electrode material or the roll-pressed electrode plate,
   wherein the drying is performed by a dryer for applying at least one of heat from a heat source and heat of hot wind to the electrode plate.
Clause 12. The method as claimed in clause 11, wherein the hot wind is introduced through a hot wind inlet of the dryer, and
   the introduced hot wind is discharged from the dryer, used to dry the electrode plate, and then discharged.
Clause 13. The method as claimed in clause 11 or clause 12, further comprising moving the dryer from the electrode plate in response to a traveling speed of the electrode plate.
Clause 14. The method as claimed in any one of clauses 11 to 13, further comprising selecting the heat of at least one of the heat source and the hot wind and applying the heat to the electrode plate in response to a traveling speed of the electrode plate.
Clause 15. The method as claimed in any one of clauses 11 to 14, further comprising changing a pass line of the electrode plate.
Clause 16. The method as claimed in any one of clauses 11 to 15, further comprising blocking the heat from at least one of the heat source and the hot wind when traveling stoppage of the electrode plate is detected.
Clause 17. A drying device for an electrode plate of a secondary battery, comprising a dryer configured to apply at least one of heat from a heat source and heat of hot wind to an electrode plate coated with an electrode material or a roll-pressed electrode plate.
Clause 18. The drying device as claimed in clause 17, wherein the dryer is configured to move a position thereof from the electrode plate in response to a traveling speed of the electrode plate.
Clause 19. The drying device as claimed in clause 17 or clause 18, further comprising a movable roller for extending a pass line of the electrode plate to be dried while passing through the dryer.
Clause 20. The drying device as claimed in any one of clauses 17 to 19, wherein the dryer further includes a shutter for blocking the heat from at least one of the heat source and the hot wind of the dryer when traveling stoppage of the electrode plate is detected.

## Claims

1. An apparatus for manufacturing an electrode plate of a secondary battery, the apparatus comprising:
a coating unit configured to coat an electrode material onto a substrate to form an electrode plate;
a roll pressing unit configured to compress the electrode plate; and
a drying unit configured to dry the electrode plate, the drying unit comprising a dryer configured to selectively apply heat from a heat source and/or heat of hot wind to dry the electrode plate.

2. The apparatus as claimed in claim 1, wherein the drying unit has a space for accommodating the electrode plate and a chamber for accommodating the dryer,
wherein the dryer has a hot wind inlet through which the hot wind is introduced, and
wherein the chamber has a hot air outlet through which the hot wind introduced via the hot wind inlet is discharged after drying the electrode plate.

3. The apparatus as claimed in claim 1 or claim 2, wherein the dryer is configured to vary its distance from the electrode plate in response to a traveling speed of the electrode plate.

4. The apparatus as claimed in any one of the preceding claims, wherein the dryer is configured to select the heat the heat source and/or the hot wind and apply the same to the electrode plate in response to a traveling speed of the electrode plate.

5. The apparatus as claimed in any one of the preceding claims, wherein the drying unit further comprises a movable roller for extending a pass length of the electrode plate passing through the dryer.

6. The apparatus as claimed in claim 5, wherein the drying unit further comprises a controller configured to move the movable roller to change the pass length of the electrode plate.

7. The apparatus as claimed in any one of the preceding claims, wherein the dryer further comprises a shutter for blocking the heat from the heat source and the hot wind of the dryer when traveling stoppage of the electrode plate is detected.

8. The apparatus as claimed in claim 7, wherein the drying unit further comprises a controller configured to control opening and closing of the shutter.

9. The apparatus as claimed in claim 1, wherein the drying unit further comprises a controller configured to:
select the heat of the heat source and/or the hot wind;
adjust an amount of the heat; and
move the dryer toward or away from the electrode plate.

10. The apparatus as claimed in any one of the preceding claims, wherein the dryer of the drying unit comprises:
a first dryer configured to apply the heat from the heat source and/or the heat of the hot wind to a first surface of the electrode plate; and
a second dryer configured to apply the heat from the heat source and/or the heat of the hot wind to a second surface of the electrode plate.

11. A method of manufacturing an electrode plate of a secondary battery, the method comprising:
coating an electrode material onto a substrate to form an electrode plate;
roll pressing the electrode plate to compress the electrode plate; and
drying the electrode plate by using a dryer configured to apply heat from a heat source and/or heat of hot wind to the electrode plate.

12. The method as claimed in claim 11, wherein the hot wind is introduced through a hot wind inlet of the dryer, and
wherein the introduced hot wind is discharged from the dryer after drying the electrode plate.

13. The method as claimed in claim 11 or claim 12, further comprising moving the dryer toward or away from the electrode plate in response to a traveling speed of the electrode plate.

14. The method as claimed in any one of claims 11 to 13, further comprising selecting the heat of the heat source and/or the hot wind and applying the heat to the electrode plate in response to a traveling speed of the electrode plate.

15. The method as claimed in any one of claims 11 to 14, further comprising changing a pass length of the electrode plate.
